(19) Europäisches Patentamt
European Patent Office
Office européen des brevets

(11) **EP 0 837 897 B1**

(12) # EUROPÄISCHE PATENTSCHRIFT

(45) Veröffentlichungstag und Bekanntmachung des Hinweises auf die Patenterteilung:
**10.03.1999 Patentblatt 1999/10**

(21) Anmeldenummer: **96925718.7**

(22) Anmeldetag: **11.07.1996**

(51) Int Cl.[6]: **C08G 77/38**, C09D 183/06

(86) Internationale Anmeldenummer:
**PCT/EP96/03036**

(87) Internationale Veröffentlichungsnummer:
**WO 97/03110 (30.01.1997 Gazette 1997/06)**

(54) **(METH)ACRYLOXYGRUPPEN AUFWEISENDE ORGANOSILICIUMVERBINDUNGEN, DEREN HERSTELLUNG UND VERWENDUNG**

(METH)ACRYLOXY GROUPS-CONTAINING ORGANOSILICIC COMPOUNDS, THEIR PREPARATION AND USE

COMPOSES ORGANOSILICIQUES PRESENTANT DES GROUPES (METH)ACRYLOXYLES, LEUR PREPARATION ET LEUR UTILISATION

(84) Benannte Vertragsstaaten:
**DE FR GB**

(30) Priorität: **13.07.1995 DE 19525562**
**09.11.1995 DE 19541838**

(43) Veröffentlichungstag der Anmeldung:
**29.04.1998 Patentblatt 1998/18**

(73) Patentinhaber: **Wacker-Chemie GmbH**
**81737 München (DE)**

(72) Erfinder:
- **DAUTH, Jochen**
  **D-84489 Burghausen (DE)**
- **DEUBZER, Bernward**
  **D-84489 Burghausen (DE)**
- **MAHR, Günter**
  **D-84489 Burghausen (DE)**
- **GRATZL, Petra**
  **D-84577 Tuessling (DE)**
- **OTT, Monika**
  **D-84533 Haiming (DE)**

(74) Vertreter: **Deffner-Lehner, Maria, Dr.**
**Wacker-Chemie GmbH,**
**Zentralabteilung PLM,**
**Hanns-Seidel-Platz 4**
**81737 München (DE)**

(56) Entgegenhaltungen:
**EP-A- 0 355 381**
**EP-A- 0 656 386**
**GB-A- 1 175 266**
**US-A- 4 294 974**
**US-A- 4 348 454**
**US-A- 5 272 013**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die DE-B 2 335 118 (veröffentlicht am 2. November 1978, E. R. Martin, SWS Silicones Corp.) bzw. die korrespondierende US-A 3,878,263 betrifft gegebenenfalls substituierte Acrylatgruppen enthaltende Organopolysiloxane. Die Siloxanpolymere können als Zwischenprodukte bei der Herstellung von Copolymeren eingesetzt werden, die Organopolysiloxansegmente enthalten und die als Beschichtungsmassen Verwendung finden. Außerdem können diese acrylatfunktionellen Siloxanpolymeren als Schlichtemittel und als Schutzüberzugsmassen für Papier und Gewebe dienen. Diese Produkte sind jedoch zur Herstellung abhasiver Beschichtungsmittel ungeeignet. Die linearen diacrylatmodifizierten Polysiloxane gemäß DE-B 2 335 118 weisen zudem definitionsgemäß Alkoxygruppen auf, die hydrolytisch abgespalten werden können und zur weiteren Vernetzung der Polysiloxane unter Verschlechterung der für eine Beschichtungsmasse wichtigen elastischen Eigenschaften führen.

Gemäß US-A 4 503 208 (ausgegeben 5.Marz 1985, Samuel Q. S. Lin et al., Loctite Corporation) werden Acryloxygruppen aufweisende Organopolysiloxane in einer Hydrosilylierungsreaktion durch Umsetzung von Organopolysiloxan mit Si-gebundenem Wasserstoff mit Propargyl(meth)acrylat erhalten. Der zur Herstellung des Propargyl (meth)acrylates eingesetzte Propargylalkohol weist eine verhältnismäßig hohe Toxizität auf, und die Veresterung von Propargylalkohol mit (Meth)acrylsäure ergibt schlechte Ausbeuten.

Aus EP-A 130 731 (offengelegt 9. Januar 1985, Samuel Q. S. Lin et al., Loctite Corporation) bzw. aus der korrespondierenden CA-A 1,242,447 ist die Umsetzung von Organopolysiloxan mit Si-gebundenem Wasserstoff mit Beta(allyloxy)ethylmethacrylat in Gegenwart eines Hydrosilylierungs-Katalysators bekannt. Hierbei werden Methacryloxygruppen aufweisende organopolysiloxane erhalten. Acryloxygruppen aufweisende Organopolysiloxane sind durch analoge Umsetzung nicht selektiv erhältlich, da die Hydrosilylierung sowohl am Acryl- als auch am Allylrest auftritt.

In DE-C 3 820 294 (veröffentlicht am 5. Oktober 1989, Christian Weitemeyer et al., Th. Goldschmidt AG) bzw. in der korrespondierenden US-A 4,978,726 werden neue Polysiloxane mit über SiC-Gruppen gebundenen (Meth)acrylsäure- und Monocarbonsäureestergruppen und deren Verwendung als strahlungshärtende abhäsive Beschichtungsmittel beschrieben. Die erfindungsgemäßen Organopolysiloxane sind dadurch erhältlich, daß man epoxyfunktionelle Organopolysiloxane zunächst mit (Meth)acrylsäure und anschließend mit einer Monocarbonsäure, welche frei von zur Polymerisation befähigten Doppelbindungen ist, in solchen Mengen umgesetzt, daß alle Epoxidgruppen verestert werden. Dabei entstehen durch Öffnung des Epoxidringes (Meth)acrylsäuremonoester mit einer vicinalen Hydroxylgruppe. Die Produkte werden zumeist bei 100°C über 30 Stunden hergestellt, wobei sie mit tiefgrüner Färbung anfallen. Durch die extremen Syntheseparameter muß das Acrylatsystem entsprechend inhibiert werden, damit keine thermische Vernetzung eintritt. Die (Meth)acrylsäure wird zudem in mindestens vierfachem überschuß zugesetzt, der nach der Reaktion destillativ entfernt werden muß. Die zur Herstellung der epoxyfunktionellen Polysiloxane verwendeten ungesättigten Epoxide Vinylcyclohexenoxid und Allylglycidether weisen eine verhältnismäßig hohe Toxizität auf. Außerdem ist dem Fachmann verständlich, daß durch die vicinalen Hydroxygruppen und den damit verbundenen polaren Wechselwirkungen keine stabilen Trennkräfte bei der Verwendung als abhäsive Beschichtungsmittel zu erreichen sind.

Gemäß US 4 294 974 (ausgegeben 13. Oktober 1981, A.R. Le Boenf, American Optical Corporation) werden hydrophile über (Meth)acrylatgruppen vernetzbare Polysiloxane beschrieben. Diese Produkte sind zur Herstellung abhäsiver Beschichtungsmittel ungeeignet.

Aus EP-A 281 718 (offengelegt 14. September 1988, E. Cahivenc, M. Gay, Rhone Poulenc) bzw. aus der korrespondierenden US-A 4,940,766 ist bekannt, daß Polysiloxane mit Hydroxyalkylgruppen durch Umesterung mit (Meth)acrylsäurealkylestern unter Zinnkatalyse entsprechend mit (Meth)acrylsäureestergruppen funktionalisiert werden können.

In US 4 348 454 (offengelegt am 2. März 1981, R. F. Eckberg, General Electric Company) werden (Meth) acrylsäureester modifizierte Polysiloxane durch Umsetzung von Polysiloxanen mit Alkylchloridgruppen und (Meth) acrylsäure unter Zusatz von Chlorwasserstoff neutralisierenden Basen erhalten.

Es bestand die Aufgabe, (Meth)acryloxygruppen aufweisende Organosiliciumverbindungen bereitzustellen, die in einem einfachen Verfahren mit hoher Selektivität, unter Verwendung leicht zugänglicher Ausgangsstoffe und unter Vermeidung der thermischen Polymerisation von (Meth)acrylestergruppen und einer Verfärbung der Organosiliciumverbindungen hergestellt werden können. Weiterhin bestand die Aufgabe, (Meth)acryloxygruppen aufweisende Organopolysiloxane bereitzustellen, welche bei Einwirkung von Licht mit Radikal initiatoren rasch vernetzen. Es bestand weiterhin die Aufgabe, (Meth)acryloxygruppen aufweisende Organopolysiloxane bereitzustellen, die zur Herstellung von überzügen eingesetzt werden können. Die Aufgabe wird durch die Erfindung gelöst.

Gegenstand der Erfindung sind (Meth)acryloxygruppen aufweisende Organosiliciumverbindungen mit Einheiten der Formel

$$A_aR_bSiX_cO_{\frac{4-(a+b+c)}{2}} \qquad (I),$$

wobei R gleich oder verschieden ist, einen einwertigen, gegebenenfalls halogenierten Kohlenwasserstoffrest mit 1 bis 18 Kohlenstoffatom(en) je Rest oder einen Rest der Formel

$$-R'-[OCH_2CH_2]_o-[OCH(CH_3)CH_2]_p-[O(CH_2)_4]_q-OR''$$

bedeutet, wobei

R' ein linearer oder verzweigter Alkylenrest mit 1 bis 8 Kohlenstoffatom(en) je Rest,
R'' ein Wasserstoffatom, ein Alkylrest mit 1 bis 8 Kohlenstoffatom(en) je Rest oder ein Rest der Formel -CO-R''' ist, wobei R'' ein Alkylrest mit 1 bis 8 Kohlenstoffatom(en) je Rest ist,
o 0 oder eine ganze Zahl von 1 bis 100,
p 0 oder eine ganze Zahl von 1 bis 100 und
q 0 oder eine ganze Zahl von 1 bis 100 ist,
mit der Maßgabe, daß die Summe o+p+q > 0 ist,
X gleich oder verschieden ist, ein Chloratom oder ein Rest der Formel $-OR^1$ ist,
wobei $R^1$ einen Alkylrest mit 1 bis 8 Kohlenstoffatom(en) je Rest, der durch ein Ethersauerstoffatom substituiert sein kann, bedeutet,
a 0 oder 1,
b 0, 1, 2 oder 3,
c 0, 1, 2 oder 3
und die Summe a+b+c ≤ 4 ist und
A ein Rest der Formel

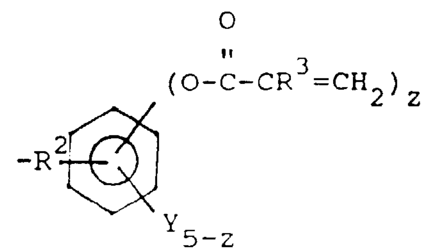

ist, wobei z 1, 2, 3, 4 oder 5,
$R^2$ einen linearen oder verzweigten Alkylenrest mit 1 bis 8 Kohlenstoffatom(en) je Rest, der gegebenenfalls Ether-, Amin-, Sulfid-, Ester-, Amid-, Harnstoff- und Urethangruppen enthalten kann,
$R^3$ ein Wasserstoffatom oder einen Methylrest und
Y gleich oder verschieden ist, ein Wasserstoffatom oder einen linearen oder verzweigten Alkylrest mit 1 bis 6 Kohlenstoffatom(en) je Rest,

$$-X,\ -CN,\ -NR^4_2,\ -SR^4,\ -O-\overset{O}{\overset{\|}{C}}-R^4,\ -\overset{O}{\overset{\|}{C}}-OR^4,\ -NR^4-\overset{O}{\overset{\|}{C}}-R^4,\ -\overset{O}{\overset{\|}{C}}-NR^4_2$$

oder $-NO_2$ bedeutet, wobei X die oben dafür angegebene Bedeutung hat und $R^4$ die Bedeutung von R hat,

mit der Maßgabe, daß mindestens ein Rest A je Molekül enthalten ist.

Gegenstand der Erfindung ist weiterhin ein Verfahren zur Herstellung von (Meth)acryloxygruppen aufweisenden Organosiliciumverbindungen dadurch gekennzeichnet, daß Organosiliciumverbindungen (1) mit Einheiten der Formel

$$B_aR_bSiX_cO_{\frac{4-(a+b+c)}{2}} \qquad \text{(II),}$$

wobei

R, X, a, b und c die oben dafür angegebene Bedeutung haben und
B ein Rest der Formel

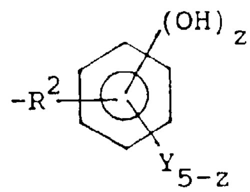

ist, wobei $R^2$, Y und z die oben dafür angegebene Bedeutung haben,
mit der Maßgabe, daß mindestens ein Rest B je Molekül enthalten ist,
mit (Meth)acrylsäurechlorid (2) der Formel

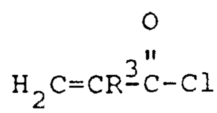

wobei $R^3$ ein Wasserstoffatom oder ein Methylrest ist, in Gegenwart von Basen (3) umgesetzt werden.

Gegenstand der Erfindung ist ein weiteres Verfahren zur Herstellung von (Meth)acryloxygruppen aufweisenden Organosiliciumverbindungen, dadurch gekennzeichnet, daß Organosiliciumverbindungen (1) mit Einheiten der Formel

$$B_aR_bSiX_cO_{\frac{4-(a+b+c)}{2}} \qquad \text{(II),}$$

wobei

X, R, a, b und c die oben dafür angegebene Bedeutung haben und
B ein Rest der Formel

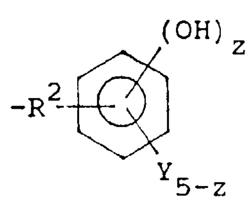

ist, wobei $R^2$, Y und z die oben dafür angegeben Bedeutung haben,
mit der Maßgabe, daß mindestens ein Rest B je Molekül enthalten ist,
mit (Meth)acrylsäuren in Gegenwart von sauren Katalysatoren (4) verestert werden.

Die erfindungsgemäßen Organosiliciumverbindungen besitzen vorzugsweise ein durchschnittliches Moleku-

largewicht $M_n$ von 500 bis 1 000 000 g/mol, bevorzugt 5 000 bis 150 000 g/mol und vorzugsweise eine Viskosität von 10 bis 1 000 000 $mm^2 \cdot s^{-1}$ bei 25 °C, bevorzugt 20 bis 100 000 $mm^2 \cdot s^{-1}$ bei 25 °C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Reste R' sind Alkylreste der Formel

$$-CH_2-CH_2-,\quad -CH_2-CH_2-CH_2-,\quad -CH_2-CH(CH_3)-$$

Bevorzugte Reste für R" sind ein Wasserstoffatom, der Methyl- und der n-Butylrest.

Ein bevorzugter Rest für R"' ist der Methylrest.

Bevorzugt sind o, p und q 0 oder eine ganze Zahl von 3 bis 35, mit der Maßgabe, daß die Summe $o+p+q > 0$ ist.

Beispiele für Alkylreste $R^1$ sind Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Beispiele für Reste $R^2$ sind Alkylreste der Formel

$$-CH_2-CH_2-,\quad -CH_2-CH_2-CH_2-,\quad -CH_2-CH(CH_3)-$$

und substitutierte Alkylreste der Formel

$$-CH_2-CH_2-CH_2-O-,\quad -(CH_2)_3-O-C(=O)-,\quad -(CH_2)_3-NH-,\quad -CH_2-CH(CH_3)-CH_2-O-,$$

$$-CH_2-CH(CH_3)-CH_2-O-C(=O)-,\quad -CH_2-CH(CH_3)-CH_2-NH-,\quad -(CH_2)_{10}-C(=O)-O-,\quad -(CH_2)_3-S-$$

$$-(CH_2)_2-NH-C(=O)-O-,\quad -(CH_2)_2-NH-C(=O)-NH-.$$

Bevorzugt ist der Rest $R^3$ ein Wasserstoffatom.

Beispiele für Reste A sind solche der Formel

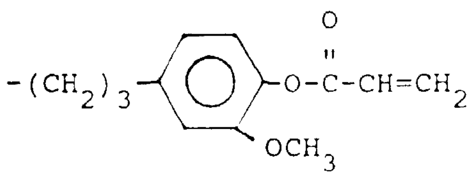

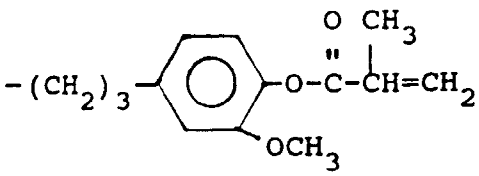

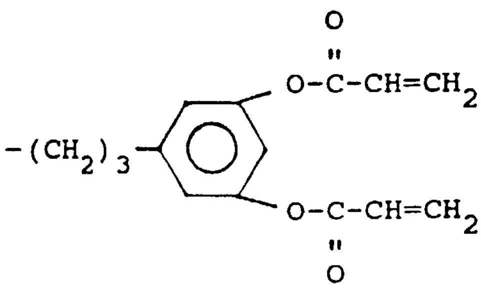

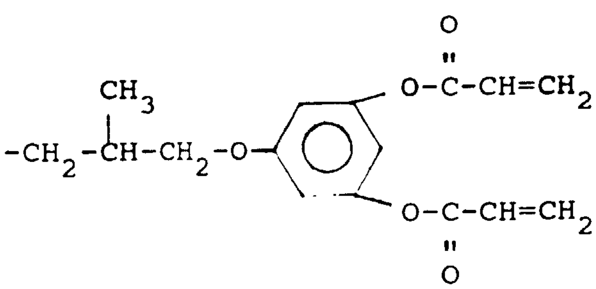

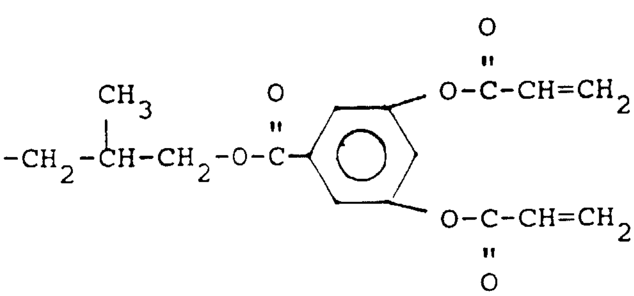

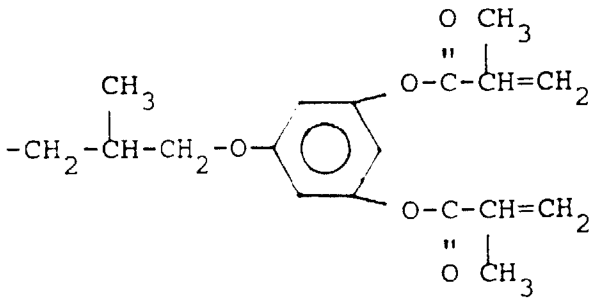

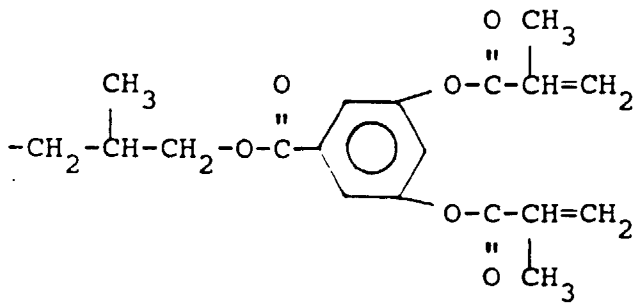

In Formel (I) und (II) ist c bevorzugt 0.
In Formel (I) und (II) ist vorzugsweise

a durchschnittlich 0,01 bis 1,0,
b durchschnittlich 0,0 bis 3,0,
c durchschnittlich 0,0 bis 3,0 und vorzugsweise die Summe a+b+c durchschnittlich 0,1 bis 4,0.

Vorzugsweise sind die erfindungsgemäßen Organosiliciumverbindungen Organopolysiloxane.
Bevorzugt als (Meth)acryloxygruppen auweisende Organopolysiloxane sind solche der Formel

$$A_gR_{3-g}SiO(SiR_2O)_n(SiRAO)_mSiR_{3-g}A_g \qquad (III)$$

wobei A und R die oben dafür angegebene Bedeutung haben, g 0, 1 oder 2, n 0 oder eine ganze Zahl von 1 bis 1500 und m 0 oder eine ganze Zahl von 1 bis 200 ist,
mit der Maßgabe, daß mindestens ein Rest A je Molekül enthalten ist.
Vorzugsweise sind die bei den erfindungsgemäßen Verfahren eingesetzten Organosiliciumverbindungen (1) Organopolysiloxane. Bevorzugt werden solche der Formel

$$B_gR_{3-g}SiO(SiR_2O)_n(SiRBO)_mSiR_{3-g}B_g \qquad (IV)$$

wobei B, R, g, n und m die oben dafür angegebene Bedeutung haben, bei den erfindungsgemäßen Verfahren eingesetzt.
Beispiele für Reste B sind solche der Formel

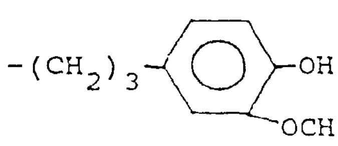

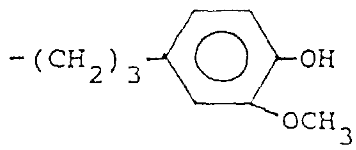

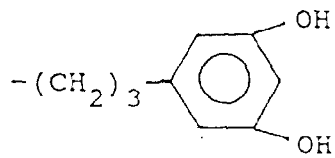

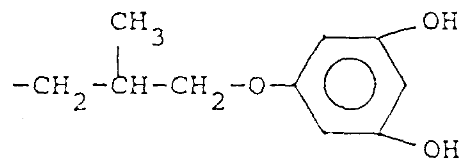

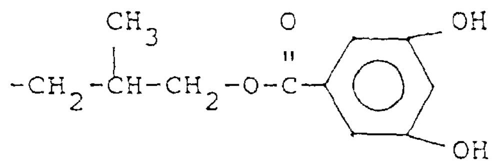

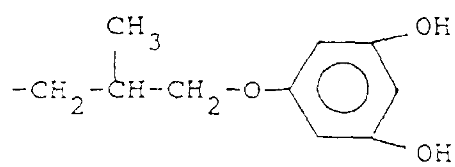

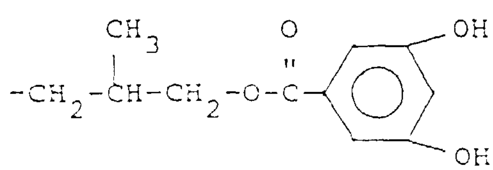

Beispiele für Basen (3), die bei dem erfindungsgemäßen Verfahren eingesetzt werden, sind Amine, wie Triethylamin, Triisooctylamin, Pyridin, Diethylamin, und Piperazin und anorganische Basen, wie Kaliumhydroxid, Natriumhydroxid, Caesiumhydroxid, Calciumhydroxid, Natriumcarbonat, Natriumhydrogencarbonat und Natriummethylat.

Stabilisatorzusätze können vorteilhaft sein; Verwendung können Radikalstopper, wie Phenothiazin, Methoxyphenol, butyliertes Hydroxytoluol, Kupfer oder Kupferverbindungen finden.

Bei dem erfindungsgemäßen Verfahren werden pro Mol Hydroxygruppe im Rest B der Organosiliciumverbindung (1) vorzugsweise 0,5 - 12 Mol (Meth)acrylsäurechlorid (2), bevorzugt 0,5 - 6 Mol (Meth)acrylsäurechlorid (2) und

besonders bevorzugt 1 - 2 Mol (Meth)acrylsäurechlorid (2) verwendet. Die bei dem erfindungsgemäßen Verfahren entstehenden Aminhydrochloride bzw. Salze werden durch Filtration entfernt.

Die Basen 3 werden vorzugsweise in solchen Mengen eingesetzt, daß 0,5 bis 6 Mol, bevorzugt 1 bis 2 Mol pro Mol Hydroxygruppe im Rest B der Organosiliciumverbindung vorliegen.

Bei dem weiteren erfindungsgemaßen Verfahren werden pro Mol Hydroxygruppe im Rest B der Organosiliciumverbindung (1) vorzugsweise 0,5 - 12 Mol (Meth)acrylsaure, bevorzugt 0,5 - 6 Mol (Meth)acrylsäure und besonders bevorzugt 1 - 3 Mol (Meth)acrylsäure verwendet.

Als die Veresterung fördernde Katalysatoren (4) können auch bei dem erfindungsgemäßen Verfahren die gleichen Katalysatoren eingesetzt werden, die auch bisher zur Förderung der Veresterung eingesetzt werden konnten. Bei den Katalysatoren (4) handelt es sich vorzugsweise um Protonensäuren, wie Schwefelsäure, Chlorwasserstoff, Phosphorsäure, Trifluormethansulfonsäure, p-Toluolsulfonsäure, und sogenannte saure Erden, wie Tonsil und KSF/O.

Die Katalysatoren (4) werden vorzugsweise in Mengen von 0,01 bis 5 Gew.-%, bevorzugt in Mengen von 0,1 bis 2 Gew.-%, bezogen auf das Gesamtgewicht von (Meth)acrylsäure und Organosiliciumverbindung (1) eingesetzt.

Die erfindungsgemäßen Verfahren werden vorzugsweise beim Druck der umgebenden Atmosphäre, also etwa bei 1020 hPa (abs.) durchgeführt. Sie können aber auch bei höheren oder niedrigeren Drücken durchgeführt werden. Ferner werden die erfindungsgemäßen Verfahren vorzugsweise bei einer Temperatur von 25 °C bis 150 °C, bevorzugt 25 °C bis 120 °C, besonders bevorzugt 25°C bis 60°C, durchgeführt.

Bei den erfindungsgemäßen Verfahren können inerte, organische Lösungsmittel mitverwendet werden. Beispiele für inerte organische Lösungsmittel sind Toluol, Xylol, Octanisomere, Butylacetat und THF.

Weiterhin können bei den erfindungsgemäßen Verfahren nicht veresterte Hydroxygruppen der Organosiliciumverbindung (1) durch Vinylether unter Säurekatalyse oder durch Carboxylierungsmittel, wie Essigsäureanhydrid, Diketen, Dihydropyran weiter umgesetzt werden.

Von den nach den erfindungsgemäßen Verfahren hergestellten (Meth)acryloxygruppen aufweisenden Organosiliciumverbindungen wird vorzugsweise überschüssiges (Meth)acrylsäurechlorid (2) bzw. überschüssige (Meth) acrylsäure, überschüssiges Carboxylierungsmittel sowie gegebenenfalls mitverwendetes inertes organisches Lösungsmittel vorzugsweise destillativ entfernt.

Verfahren zur Herstellung der bei den erfindungsgemäßen Verfahren eingesetzten Organosiliciumverbindungen (1) sind in DE-A 15 95 789 (offengelegt 12. Februar 1970, K.W. Krautz, General Electric Company) bzw. in der korrespondierenden GB-A 1 175 266 beschrieben.

Die ungesättigten Hydroxyphenylkomponenten für die Herstellung der Organosiliciumverbindung (1) mit dem Rest B der Formel II durch eine Hydrosilylierungsreaktion in Gegenwart von Hydrosilylierungskatalysatoren sind beispielsweise unter der Bezeichnung Eugenol (4-Allyl-2-methoxyphenol) bei der Fa. Haarmann & Reimer käuflich erwerblich und haben im Vergleich zu flüchtigen ungesättigten Alkoholen, wie Allylalkohol oder Propargylalkohol eine wesentlich geringere Toxizität. Eugenol im speziellen ist sogar für den Lebensmittelbereich zugelassen.

Die zusätzlich funktionalisierten Hydroxyphenylkomponenten für die Herstellung der Organosiliciumverbindung (1) mit dem Rest B der Formel II durch eine nukleophile Substitutionsreaktion sind beispielsweise unter der Bezeichnung Phloroglucin oder 3,5-Dihydroxybenzoesäure käuflich erwerblich und haben ebenfalls eine geringe Toxizität.

Für die Darstellung der Organosiliciumverbindung (1) mit dem Rest B der Formel II durch eine Hydrosilylierungsreaktion werden vorzugsweise Organosiliciumverbindungen mit mindestens einem Si-gebundenem Wasserstoff je Molekül der Formel

$$H_eR_fSiO_{\frac{4-(e+f)}{2}} \qquad (V)$$

worin

R die oben dafür angegebene Bedeutung hat,
e 0 oder 1, durchschnittlich 0,01 bis 1,0,
f 0, 1, 2 oder 3, durchschnittlich 0,0 bis 3,0 und die Summe e + f nicht größer als 3 ist, eingesetzt.

Die Organopolysiloxane mit mindestens einem Si-gebundenen Wasserstoffatom enthalten vorzugsweise mindestens 0,04 Gew.% bevorzugt 0,1 bis 1,6 Gew.-% Si-gebundenen Wasserstoff und ihre durchschnittliche Viskosität beträgt vorzugsweise 5 bis 20 000 $mm^2 \cdot s^{-1}$ bei 25 °C, bevorzugt 10 bis 2 000 $mm^2 \cdot s^{-1}$ bei 25 °C, besonders bevorzugt 10 bis 500 $mm^2 \cdot s^{-1}$ bei 25 °C.

Bevorzugt werden als Organopolysiloxane mit mindestens einem Si-gebundenen Wasserstoffatom je Molekül solche der Formel

$$H_hR_{3-h}SiO(SiR_2O)_o(SiRHO)_pSiR_{3-h}H_h \qquad (VI)$$

wobei

R die oben dafür angegebene Bedeutung hat,
h 0, 1 oder 2, o 0 oder eine ganze Zahl von 1 bis 1500 und
p 0 oder eine ganze Zahl von 1 bis 200 ist, verwendet.

Ungesättigte Hydroxyphenylverbindungen werden bei der Hydrosilylierungsreaktion vorzugsweise in solchen Mengen eingesetzt, daß 1 bis 2 Mol, bevorzugt 1,05 bis 1,20 Mol, ungesättigte Hydroxyphenylverbindung je Grammatom Si-gebundener Wasserstoff in der Organosiliciumverbindung (V) vorliegt.

Bei der Hydrosilylierungsreaktion können als die Anlagerung von Si-gebundenem Wasserstoff an aliphatische Mehrfachbindung fördernde Katalysatoren, sogenannte Hydrosilylierungskatalysatoren, die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe Platinmetalle. Beispiele für solche Katalysatoren sind metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z. B. $PtCl_4$, $H_2PtCl_6$*$6H_2O$, $Na_2PtCl_4$*4 $H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCL_6$*$6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)platindichlorid, Trimethylendipyridinplatindichlorid, Dicyclopentadienplatindichlorid, Dimethylsulfoxidethylenplatin-(II)-dichlorid, Cyclooctadien-Platindichlorid, Norbornadien-Platindichlorid, Gammapicolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 42 92 434, wie das Umsetzungsprodukt aus in 1-Octen gelostem Platintetrachlorid mit sec.-Butylamin, oder Ammonium-Platinkomplexe gemäß EP-B 1 10 370.

Bei der Hydrosilylierungsreaktion wird der Katalysator vorzugsweise in Mengen von 2 bis 200 Gew.-ppm (Gewichtsteilen je Million Gewichtsteilen), bevorzugt in Mengen von 5 bis 50 Gew.-ppm, jeweils berechnet als elementares Platin und bezogen auf das Gesamtgewicht von ungesättigter Hydroxyphenylverbindung und Organosiliciumverbindung mit mindestens einem Si-gebundenen Wasserstoffatom, eingesetzt.

Die Hydrosilylierungsreaktion wird vorzugsweise beim Druck der umgebenden Atmosphäre, also etwa bei 1020 hPa (abs.) durchgeführt, sie kann aber auch bei höheren oder niedrigeren Drücken durchgeführt werden. Ferner wird die Hydrosilylierungsreaktion vorzugsweise bei einer Temperatur von 25 °C bis 150 °C, bevorzugt 40 °C bis 100 °C, durchgeführt.

Bei der Hydrosilylierungsreaktion können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Isophoron, Octanisomere, Butylacetat und Isopropanol.

Von den nach der Hydrosilylierungsreaktion hergestellten Hydroxyphenylgruppen enthaltenden Organosiliciumverbindungen (1) wird vorzugsweise überschüssige ungesättigte Hydroxyphenylverbindung sowie gegebenenfalls mitverwendetes inertes organisches Lösungsmittel destillativ entfernt.

Für die Darstellung der Organosiliciumverbindung (1) mit Rest B der Formel II durch eine nukleophile Substitutionsreaktion werden vorzugsweise Organosiliciumverbindungen mit mindestens einer Si-gebundenen Chloralkylgruppe je Molekül der Formel

$$Cl\text{-}R^2_e\,R_fSiO_{\frac{4-(e+f)}{2}} \qquad (VII)$$

worin

$R^2$ die oben dafür angegebene Bedeutung hat,
e 0 oder 1, durchschnittlich 0.01 bis 1.0,
f 0, 1, 2 oder 3, durchschnittlich 0.0 bis 3.0
und die Summe e + f nicht größer als 3 ist, eingesetzt.

Die Organopolysiloxane mit mindestens einer Si-gebundener Chloralkylgruppe enthalten vorzugweise mindestens 0.1 Gew.% bevorzugt 0.5 bis 7.0 Gew.% Chlor als Si-gebundene Chloralkylgruppen und ihre durchschnittliche Viskosität beträgt vorzugsweise 5 bis 20.000 $mm^2 \cdot s^{-1}$ bei 25°C, besonders bevorzugt 10 bis 500 $mm^2 \cdot s^{-1}$ bei 25°C.

Bevorzugt werden als Organopolysiloxane mit mindestens einer Si-gebundenen Chloralkylgruppe je Molekül solche der Formel

$$Cl\text{-}R^2{}_hR_{3-h}SiO(SiR_2O)_o(SiRR^2\text{-}ClO)_pSiR_{3-h}R^2\text{-}Cl \qquad \text{(VIII)},$$

wobei

R und $R^2$ die oben dafür angegebene Bedeutung hat,
h 0, 1 oder 2,
o 0 oder eine ganze Zahl von 1 bis 1.500 und
p 0 oder eine ganze Zahl von 1 bis 200 ist, verwendet.

Verfahren zum Herstellen der Organosilicumverbindungen mit mindestens einer Si-gebundenen Chloralkylgruppe je Molekül, auch von solchen der bevorzugten Art, sind allgemein bekannt und beispielsweise in US 3,346,405 (ausgegeben im Oktober 1967, R.V. Viventi, General Electric Company) beschrieben.

Substituierte Hydroxyphenylverbindungen werden bei der nukleophilen Substitutionsreaktion vorzugsweise in solchen Mengen eingesetzt, daß 1 bis 2 Mol, bevorzugt 1.05 bis 1.2 Mol, substituierte Hydroxyphenylverbindung je Grammatom Si-alkyl-gebundenem Chlor in der Organosiliciumverbindung (VII) bzw. (VIII) vorliegt.

Als bei der nukleophilen Substitution auftretender Chlorwasserstoff neutralisierende Basen werden Amine, wie Triethylamin, Triisooctylamin, Pyridin, Diethylamin, Piperazin und anorganische Basen, wie Kaliumhydroxid, Natriumhydroxid, Caesiumhydroxid, Calciumhydroxid, Natriumcarbonat, Natriumhydrogencarbonat und Natriummethylat, verwendet.

Die Basen werden vorzugsweise in solchen Mengen eingesetzt, daß 1 bis 2 Mol, bevorzugt 1.0 bis 1.3 Mol, je Grammatom Si-alkyl-gebundenem Chlor in der Organosilicumverbindung (VII) bzw. (VIII) vorliegen. Überschüssige Base kann gegebenenfalls nach der Umsetzung mit Säuren neutralisiert werden.

Die nukleophile Substitutionsreaktion wird vorzugsweise beim Druck der umgebenden Atmosphäre, also etwa bei 1.020 hPa (abs.) durchgeführt, kann aber auch bei höheren oder niedrigeren Drücken durchgeführt werden. Ferner wird die nukleophile Substitutionsreaktion vorzugsweise bei einer Temperatur von 70°C bis 150°C, bevorzugt 80°C bis 125°C, durchgeführt.

Bei der nukleophilen Substitutionsreaktion können inerte, organische Losungsmittel mitverwendet werden. Beispiele für inerte, organische Lösungsmittel sind Toluol, Xylol, Isophoron, Butylacetat, 1,4-Dioxan, Isopropanol, Glykolmonomethylether, Diethoxyethan und Acetonitril.

Von den nach der nukleophilen Substitutionsreaktion hergestellten Hydroxyphenylgruppen enthaltenden Organosiliciumverbindungen (1) werden vorzugsweise überschüssige substituierte Hydroxyphenylverbindung sowie gegebenenfalls mitverwendetes inertes organisches Lösungsmittel destillativ oder nach bekannten Methoden entfernt.

Die nach den erfindungsgemäßen Verfahren erhaltenen (Meth)acryloxygruppen aufweisenden Organopolysiloxane können mit organopolysiloxanen (5) ausgewählt aus der Gruppe bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

Vorzugsweise werden als lineare, endständige Triorganosiloxygruppen aufweisende Organopolysiloxane solche der Formel

$$R_3SiO(SiR_2O)_rSiR_3$$

wobei R die oben dafür angegebene Bedeutung hat und r 0 oder eine ganze Zahl im Wert von 1 bis 1500 ist, als lineare, endständige Hydroxylgruppen aufweisende Organopolysiloxane solche der Formel

$$HO(SiR_2O)_sH$$

wobei

R die oben dafür angegebene Bedeutung hat und
s eine ganze Zahl im Wert von 1 bis 1500 ist,
als cyclische Organopolysiloxane solche der Formel

$$(R_2SiO)_t$$

wobei R die oben dafür angegebene Bedeutung hat und
t eine ganze Zahl von 3 bis 12 ist,

und als Mischpolymerisate solche aus Einheiten der Formel

$$R_2SiO \text{ und } RSiO_{3/2}$$

wobei R die oben dafür angegebene Bedeutung hat, eingesetzt.

Die Mengenverhältnisse der bei der gegebenenfalls durchgeführten Equilibrierung eingesetzten Organopolysiloxane (5) und (Meth)acryloxygruppen aufweisenden Organopolysiloxane werden lediglich durch den gewünschten Anteil der (Meth)acryloxygruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise saure Katalysatoren, welche die Equilibrierung fördern, eingesetzt. Beispiele für solche Katalysatoren sind Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (= Teile je Million), insbesondere 50 bis 200 Gew.-ppm, jeweils bezogen auf das Gesamtgewicht der eingesetzten Organosiliciumverbindungen, verwendet. Die Verwendung basischer Equilibrierungskatalysatoren ist zwar möglich, jedoch nicht bevorzugt.

Die gegebenenfalls durchgeführte Equilibrierung wird vorzugsweise bei 80 °C bis 150 °C und beim Druck der umgebenden Atmosphäre, also etwa bei 1020 hPa (abs.), durchgeführt.

Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des bei dem Equilibrieren erhaltenen Gemisches kann der Katalysator unwirksam gemacht werden.

Die erfindungsgemäßen Verfahren können absatzweise, halbkontinuierlich oder vollkontinuierlich durchgeführt werden.

Die erfindungsgemäßen (Meth)acryloxygruppen aufweisenden Organosiliciumverbindungen zeichnen sich durch ihren geringen SiOC-Gehalt, ihren feinen aromatischen Geruch, ihre Transparenz und ihre geringe Verfärbung aus. Durch das erfindungsgemäße Verfahren können Hydroxyphenylgruppen aufweisende Organosiliciumverbindungen (1) mit (Meth)acrylsäurechlorid (2) bei niedrigen Temperaturen ohne Gefahr der thermischen Polymerisation der (Meth)acrylatgruppen mit kurzen Reaktionszeiten ohne Verfärbung umgesetzt werden. Die schonenden Bedingungen erlauben einen niedrigen Gehalt an Stabilisatorzusätzen, die, was dem Fachmann bekannt ist, bei der photochemischen Vernetzung oftmals zu Inhibierungsphänomenen Anlaß geben.

Gegenstand der Erfindung sind weiterhin durch Bestrahlung mit Licht vernetzbare Zusammensetzungen enthaltend

(A) (Meth)acryloxygruppen aufweisende Organopolysiloxane und
(B) Photoinitiatoren und/oder Photosensibilisatoren.

Die durch Bestrahlung mit Licht vernetzbaren Zusammensetzungen werden zur Herstellung von überzügen verwendet.

Vorzugsweise werden die erfindungsgemäßen (Meth)acryloxygruppen aufweisenden Organopolysiloxane durch Ultraviolettlicht vernetzt, wobei solches mit Wellenlängen im Bereich von 200 bis 400 nm bevorzugt ist. Das Ultraviolettlicht kann, z. B. in Xenon-, Quecksilbernieder-, Quecksilbermittel- oder Quecksilberhochdrucklampen, erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Organopolysiloxanen geeigneten Energiequellen kann es

sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Geeignete Photoinitiatoren und/oder Photosensibilisatoren sind gegebenenfalls substituierte Acetophenone, Propiophenone, Benzophenone, Anthrachinone, Benzile, Carbazole, Xanthone, Thioxanthone, Fluorene, Fluorenone, Benzoine, Naphthalinsulfonsäuren, Benzaldehyde und Zimtsäuren.

Beispiele hierfür sind Fluorenon, Fluoren, Carbazol; Acetophenon; substituierte Acetophenone, wie 3-Methylacetophenon, 2,2'-Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie l-[4-(Methylthio)phenyl]-2-morpholinpropanon-1, Benzophenon; substituierte Benzophenone, wie Michlers Keton, 3-Methoxybenzophenon, 4,4'-Dimethylaminobenzophenon, 4-Methylbenzophenon, 4-Chlorbenzophenon, 4,4'-Dimethoxybenzophenon, 4-Chlor-4'-benzylbenzophenon; Xanthon; substituierte Xanthone, wie 3-Chlorxanthon, 3,9-Dichlorxanthon, 3-chlor-8-nonylxanthon; Thioxanthon; substituierte Thioxanthone, wie Isopropylthioxanthon; Anthrachinon; substituierte Anthrachinone, wie Chloranthrachinon und Anthrachino-1,5-disulfonsäuredinatriumsalz; Benzoin; substituierte Benzoine, wie Benzoinmethylether; Benzil; 2-Naphthalinsulfonylchlorid; Benzaldehyd; Zimtsäure. Besonders bevorzugt sind 2-Methyl-1-[4-(methylthio)phenyl]-2-morpholinopropan-1-on, 2-Benzyl-2-dimethylamino-1-(4-morpholinophenyl)butan-1-on, 2,4,6-Trimethylbenzoyldiphenyl-phosphinoxid, Benzoinalkylether, 2,2-Dialkoxy-1-phenyl-ethanone, 1-Hydroxycyclohexylphenylketon, 2-Hydroxy-2-methyl-1-phenyl-propan-1-on.

Photoinitiatoren und/oder Photosensibilisatoren sind in den erfindungsgemäßen Zusammensetzungen vorzugsweise in Mengen von 0,01 bis 10 Gew.-%, insbesondere von 0,5 bis 5 Gewichtsprozent, jeweils bezogen auf das Gesamtgewicht der zu vernetzenden Organopolysiloxane, eingesetzt.

Beispiele für Oberflächen, auf welche die erfindungsgemäßen Überzüge aufgebracht werden können, sind diejenigen von Papier, Holz, Kork, Kunststoffolien, z. B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern. Anwendung finden die erfindungsgemäßen Überzüge beispielsweise in der Trennpapierbeschichtung.

Das Auftragen der erfindungsgemäßen durch Bestrahlung mit Licht vernetzbaren Zusammensetzungen auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung.

Die erfindungsgemäßen (Meth)acryloxygruppen aufweisenden Organosiliciumverbindungen, insbesondere (Meth)acryloxygruppen aufweisende Organopolysiloxane, die als Rest R einen Oxyalkylenrest der Formel

$$-R'-[OCH_2CH_2]_o-[OCH(CH_3)CH_2]_p-[O(CH_2)_4]_q-OR''$$

wobei R', R", o, p und q die oben dafür angegebene Bedeutung haben,
enthalten, finden als Lackadditiv oder -intermediat Verwendung.

Beispiel 1:

a) Eine Lösung von 47.2 g Eugenol (0.288 mol) in 104.7 g Isopropanol wurde mit 2.1 g (0.020 mol) Natriumcarbonat versetzt und unter Stickstoffinertisierung auf 80°C aufgeheizt. Bei dieser Temperatur wurden 3.490 ml (10 ppm Platin) eines Hexachloroplatinsäure-Katalysators in Isopropanol zugegeben. Anschließend wurden im Verlauf von 30 Minuten 1000 g (0.250 mol SiH) eines Polydimethylsiloxans mit seitenständigen Si-gebundenen Wasserstoffatomen und einer Viskosität von 282 $mm^2/s$ bei 25°C zudosiert und das Reaktionsgemisch 2 Stunden lang bei einer Temperatur von 90°C gerührt. Danach wurden flüchtige Bestandteile bei 120°C und einem Vakuum von 5 mbar entfernt. Nach Abkühlung und anschließender Filtration erhielt man ein bräunliches, klares Öl mit einer Viskosität von 430 $mm^2/s$ und einer Hydroxylzahl von 14.97 mg KOH/g. Ausbeute: 89.6 % (d. Th.) (VS I)

b) 40,0 g (0,01069 mol Hydroxygruppen) VS I, dessen Herstellung oben unter a) beschrieben ist, 50,0 g (0,6934 mol) Tetrahydrofuran und 1,993 g (0,01069 mol) Kaliumhydroxid (30 Gew.-% in Methanol) werden bei Raumtemperatur unter Schutzgas vorgelegt und 10 Minuten bei 30°C gerührt. Dann wird auf 40°C geheizt und werden 1,258 g (0,01399 mol) Acrylsäurechlorid langsam zugetropft, so daß eine Temperatur von 43°C nicht überschritten wird. Danach wird 30 Minuten bei 40 °C gerührt und nach dem Abkühlen filtriert. Im Vakuum wird bei 80°C bis zur

Gewichtskonstanz eingeengt. Man erhält 38,65 g (95,25 % der Theorie) eines klaren schwach gelben Öles (AS I).

Beispiel 2:

a) Eine Lösung von 292.3 g Eugenol (1.780 mol) in 149.2 g Isopropanol wurde mit 3.0 g (0.028 mol) Natriumcarbonat versetzt und unter Stickstoffinertisierung auf 80°C aufgeheizt. Bei dieser Temperatur wurden 4.973 ml (10 ppm Platin) eines Hexachloroplatinsäure-Katalysators in Isopropanol zugegeben. Anschließend wurden im Verlauf von 30 Minuten 1200 g (1.548 mol SiH) eines Polydimethylsiloxans mit seitenständigen Si-gebundenen Wasserstoffatomen und einer Viskosität von 67 $mm^2/s$ bei 25°C zudosiert und das Reaktionsgemisch 2 Stunden lang bei einer Temperatur von 90°C gerührt. Danach wurden flüchtige Bestandteile bei 120°C und einem Vakuum von 5 mbar entfernt. Nach Abkühlung und anschließender Filtration erhielt man ein bräunliches, klares Öl mit einer Viskosität von 760 $mm^2/s$ und einer Hydroxylzahl von 58.25 mg KOH/g. Ausbeute: 67.9 % (d. Th.) (VS II)

b) 60,0 g (0,06389 mol Hydroxygruppen) VS II, dessen Herstellung oben unter a) beschrieben ist, 300,0 g (4,16 mol) Tetrahydrofuran und 11,91 g (0,06389 mol) Kaliumhydroxid (30 Gew.-% in Methanol) werden bei Raumtemperatur unter Schutzgas vorgelegt. 8,67 g (0,0958 mol) Acrylsäurechlorid werden langsam zugetropft und die Lösung 10 Minuten bei 66 °C unter Rückfluß gerührt. Nach dem Abkühlen und anschließender Filtration wird im Vakuum bei 80°C bis zur Gewichtskonstanz eingeengt. Man erhält 60,55 g (95,43% der Theorie) eines hellgelben Öles (AS II).

Beispiel 3:

a) Eine Lösung von 64.0 g Eugenol (0.390 mol) in 75.5 g Isopropanol wurde mit 1.5 g (0.014 mol) Natriumcarbonat versetzt und unter Stickstoffinertisierung auf 80°C aufgeheizt. Bei dieser Temperatur wurden 2.516 ml (10 ppm Platin) eines Hexachloroplatinsäure-Katalysators in Isopropanol zugegeben. Anschließend wurden im Verlauf von 30 Minuten 691.2 g (0.339 mol SiH) eines Polydimethylsiloxans mit seitenständigen Si-gebundenen Wasserstoffatomen und einer Viskosität von 68,3 $mm^2/s$ bei 25°C zudosiert und das Reaktionsgemisch 2 Stunden lang bei einer Temperatur von 90°C gerührt. Danach wurden flüchtige Bestandteile bei 120°C und einem Vakuum von 5 mbar entfernt. Nach Abkühlung und anschließender Filtration erhielt man ein bräunliches, klares Öl mit einer Viskosität von 205 $mm^2/s$ und einer Hydroxylzahl von 27.29 mg KOH/g. Ausbeute: 78.8 % (d. Th.) (Vs III)

b) 40,0 g (0,01710 mol Hydroxygruppen) VS III, dessen Herstellung oben unter a) beschrieben ist, 20,0 g (0,2774mol) Tetrahydrofuran und 3,84 g (0,01710mol) Kaliumhydroxid (25 Gew.-% in Methanol) werden bei Raumtemperatur unter Schutzgas vorgelegt und 10 Minuten bei 30°C gerührt. Dann wird auf 40°C geheizt und 2,012 g (0,02233mol) Acrylsäurechlorid langsam zugetropft, so daß die Temperatur von 43°C nicht überschritten wird. Anschließend wird eine Stunde bei 40 °C gerührt und nach dem Abkühlen filtriert. Im Vakuum wird bei 80°C bis zur Gewichtskonstanz eingeengt. Man erhält 38,06 g (93,01 % der Theorie) eines klaren gelben Öles. 35,61 g des erhaltenen Produkts werden mit 0,256 g (0,003045 mol) Dihydropyran, 100,76µl (0,52 10-5 mol) p.-Toluolsulfonsäure (1 Gew.-% in Tetrahydrofuran) und 5,0 g (0,06934 mol)Tetrahydrofuran versetzt und bei Raumtemperatur 12 Stunden gerührt. Dann werden 524,05 µl (0,52 10-5 mol) Dimethylethanolamin (0,1 Gew.-% in Tetrahydrofuran) zugegeben und 20 Minuten bei Raumtemperatur gerührt, filtriert und anschließend im Vakuum bei 80°C bis zur Gewichtskonstanz eingeengt. Man erhält 34,44 g (96,71 % der Theorie) eines klaren leicht gelben Öles (AS III).

Beispiel 4:

a) Eine Lösung von 96.3 g Eugenol (0.587 mol) in 109.6 g Isopropanol wurde mit 2.2 g (0.021 mol) Natriumcarbonat versetzt und unter Stickstoffinertisierung auf 80°C aufgeheizt. Bei dieser Temperatur wurden 3.653 ml (10 ppm Platin) eines Hexachloroplatinsäure-Katalysators in Isopropanol zugegeben. Anschließend wurden im Verlauf von 30 Minuten 1000 g (0.510 mol SiH) eines $\alpha,\omega$-Dihydrogenpolydimethylsiloxans mit einer Viskosität von 58 $mm^2/s$ bei 25°C zudosiert und das Reaktionsgemisch 2 Stunden lang bei einer Temperatur von 90°C gerührt. Danach wurden flüchtige Bestandteile bei 120°C und einem Vakuum von 5 mbar entfernt. Nach Abkühlung und anschließender Filtration erhielt man ein bräunliches, klares Öl mit einer Viskosität von 105 $mm^2/s$ und einer Hydroxylzahl

von 30.14 mg KOH/g. Ausbeute: 86.4 % (d. Th.) (VS IV)

b) 20,0 g (0,01079 mol Hydroxygruppen) VS IV, dessen Herstellung oben unter a) beschrieben ist, 40,0 g (0,5547 mol) Tetrahydrofuran und 2,011 g (0,01079 mol) Kaliumhydroxid (30 Gew.-% in Methanol) werden unter Schutzgas vorgelegt und 15 Minuten bei Raumtemperatur gerührt. 1,27 g (0,01403 mol) Acrylsäurechlorid werden langsam zugetropft, so daß die Temperatur von 43°C nicht überschritten wird. Anschließend wird die Temperatur von ca. 35°C 30 Minuten gehalten und nach dem Abkühlen und Filtrieren im Vakuum bei 50°C bis zur Gewichtskonstanz eingeengt. Man erhält 18,95 g (92,08 % der Theorie) eines fast farblosen Öles (AS IV).

Beispiel 5:

a) Eine Lösung von 283.2 g Eugenol (1.725 mol) in 103.3 g Isopropanol wurde mit 2.1 g (0.020 mol) Natriumcarbonat versetzt und unter Stickstoffinertisierung auf 80°C aufgeheizt. Bei dieser Temperatur wurden 3.282 ml (10 ppm Platin) eines Hexachloroplatinsäure-Katalysators in Isopropanol zugegeben. Anschließend wurden im Verlauf von 30 Minuten 750 g (1.500 mol SiH) eines $\alpha,\omega$-Dihydrogenpolydimethylsiloans mit einer Viskosität von 7,8 $mm^2$/, bei 25°C zudosiert und das Reaktionsgemisch 2 Stunden lang bei einer Temperatur von 90°C geruhrt. Danach wurden flüchtige Bestandteile bei 120°C und einen Vakuum von 5 mbar entfernt. Nach Abkühlung und anschließender Filtration erhielt man ein bräunliches, klares Öl mit einer Viskosität von 61 $mm^2$/s und einer Hydroxylzahl von 88.45 mg KOH/g. Ausbeute: 86.4 % (d. Th.) (VS V)

b) 886,0 g (1,4072 mol Hydroxygruppen) VS V, dessen Herstellung oben unter a) beschrieben ist und 886,0 g (12,29 mol) Tetrahydrofuran werden unter Rühren und Schutzgas mit 266,08 g (1,4776 mol) Natriummethylat (30 Gew.-% in Methanol) versetzt und danach 1 Stunde bei Raumtemperatur gerührt. 165,58g (1,8294 mol) Acrylsäurechlorid werden langsam zugetropft, so daß die Temperatur von 43°C nicht überschritten wird. Anschließend wird zwei Stunden bei 30 °C gerührt und nach dem Abkühlen und Filtrieren im Vakuum bei 80°C bis zur Gewichtskonstanz eingeengt. Man erhält 783,9 g (81,48 % der Theorie) eines schwach orange-gelben klaren Öles (AS V).

Beispiel 6:

2 g AS IV, dessen Herstellung in Beispiel 4b beschrieben ist, wird mit 0,06 g (3,65 x $10^{-4}$ mol) des Photosensibilisators mit dem Handelsnamen Darocure 1173 gemischt und mit einem Rakel in 2 µm Schichtdicke auf eine Polyethylenfolie aufgetragen. Durch Bestrahlung mit einer Quecksilbermitteldrucklampe mit einer Leistung von 80 mW/cm in Abstand von 10 cm unter Stickstoffatmosphäre wird das Polymer in 2 Sekunden vernetzt. Die Oberfläche des Überzuges ist klebfrei.

Beispiel 7:

2 g AS V, dessen Herstellung in Beispiel 5b beschrieben ist, wird mit 0,06 g (3,65 x $10^{-4}$ mol) des Photosensibilisators mit dem Handelsnamen Darocure 1173 (käuflich erwerblich bei der Fa. Ciba-Geigy) gemischt und mit einem Rakel in 20 µm Schichtdicke auf eine Polyethylenfolie aufgetragen. Durch Bestrahlung mit einer Quecksilbermitteldrucklampe mit einer Leistung von 80 mW/cm im Abstand von 10 cm unter Stickstoffatmosphäre wird das Polymer in 2 Sekunden vernetzt. Die Oberfläche des Überzuges ist klebfrei.

Beispiel 8:

2 g AS I, dessen Herstellung in Beispiel 1b beschrieben ist, wird mit 0,06 g (2,0 x $10^{-4}$ mol) des Photosensibilisators mit dem Handelsnamen Irgacure 369 (käuflich erwerblich bei der Fa. Ciba Geigy) in 0,5 g Toluol gemischt und mit einem Rakel in 20 µm Schichtdicke auf ein Papier mit dem Handelsnamen Bosso Buxil aufgetragen. Durch Bestrahlung mit einer Quecksilbermitteldrucklampe mit einer Leistung von 80 mW/cm im Abstand von 10 cm unter Stickstoffatmosphäre wird das Polymer in einer Sekunde vernetzt. Die Oberfläche des überzuges ist klebfrei.

**Patentansprüche**

1. (Meth)acryloxygruppen aufweisende Organosiliciumverbindungen mit Einheiten der Formel

$$A_aR_bSiX_cO_{\frac{4-(a+b+c)}{2}} \qquad (I),$$

wobei R gleich oder verschieden ist, einen einwertigen, gegebenenfalls halogenierten Kohlenwasserstoffrest mit 1 bis 18 Kohlenstoffatom(en) je Rest oder einen Rest der Formel

$$-R'-[OCH_2CH_2]_o-[OCH(CH_3)CH_2]_p-[O(CH_2)_4]_q-OR''$$

bedeutet, wobei

R' ein linearer oder verzweigter Alkylenrest mit 1 bis 8 Kohlenstoffatom(en) je Rest,
R'' ein Wasserstoffatom, ein Alkylrest mit 1 bis 8 Kohlenstoffatom(en) je Rest oder ein Rest der Formel -CO-R''' ist, wobei R''' ein Alkylrest mit 1 bis 8 Kohlenstoffatom(en) je Rest ist,
o 0 oder eine ganze Zahl von 1 bis 100,
p 0 oder eine ganze Zahl von 1 bis 100 und
q 0 oder eine ganze Zahl von 1 bis 100 ist,
mit der Maßgabe, daß die Summe o+p+q > 0 ist,
X gleich oder verschieden ist, ein Chloratom oder ein Rest der Formel $-OR^1$ ist,
wobei $R^1$ einen Alkylrest mit 1 bis 8 Kohlenstoffatom(en) je Rest, der durch ein Ethersauerstoffatom substituiert sein kann, bedeutet,
a 0 oder 1,
b 0, 1, 2 oder 3,
c 0, 1, 2 oder 3
und die Summe a+b+c ≤ 4 ist und
A ein Rest der Formel

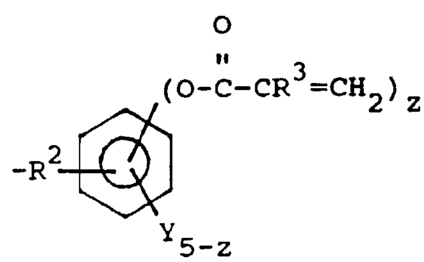

ist, wobei z 1, 2, 3, 4 oder 5,
$R^2$ einen linearen oder verzweigten Alkylenrest mit 1 bis 8 Kohlenstoffatom(en) je Rest, der gegebenenfalls Ether-, Amin-, Sulfid-, Ester-, Amid-, Harnstoff- und Urethangruppen enthalten kann,
$R^3$ ein Wasserstoffatom oder einen Methylrest und
Y gleich oder verschieden ist, ein Wasserstoffatom oder einen linearen oder verzweigten Alkylrest mit 1 bis 6 Kohlenstoffatom(en) je Rest,

$$-X,\ -CN,\ -NR^4_2,\ -SR^4,\ -O-\overset{\overset{O}{\|}}{C}-R^4,\ -\overset{\overset{O}{\|}}{C}-OR^4,\ -NR^4-\overset{\overset{O}{\|}}{C}-R^4,\ -\overset{\overset{O}{\|}}{C}-NR^4_2$$

oder $-NO_2$ bedeutet, wobei X die oben dafür angegebene Bedeutung hat und $R^4$ die Bedeutung von R hat, mit der Maßgabe, daß mindestens ein Rest A je Molekül enthalten ist.

**2.** (Meth)acryloxygruppen aufweisende Organosiliciumverbindungen nach Anspruch 1, dadurch gekennzeichnet, daß es Organopolysiloxane der Formel

$$A_gR_{3-g}SiO(SiR_2O)_n(SiRAO)_mSiR_{3-g}A_g \qquad (III)$$

sind, wobei R gleich oder verschieden ist, einen einwertigen, gegebenenfalls halogenierten Kohlenwasserstoffrest mit 1 bis 18 Kohlenstoffatom(en) je Rest oder einen Rest der Formel

$$-R'-[OCH_2CH_2]_o-[OCH(CH_3)CH_2]_p-[O(CH_2)_4]_q-OR''$$

bedeutet, wobei

R' ein linearer oder verzweigter Alkylenrest mit 1 bis 8 Kohlenstoffatom(en) je Rest,
R" ein Wasserstoffatom, ein Alkylrest mit 1 bis 8 Kohlenstoffatom(en) je Rest oder ein Rest der Formel -CO-R"' ist, wobei R"' ein Alkylrest mit 1 bis 8 Kohlenstoffatom(en) je Rest ist,
o 0 oder eine ganze Zahl von 1 bis 100,
p 0 oder eine ganze Zahl von 1 bis 100 und
q 0 oder eine ganze Zahl von 1 bis 100 ist,
mit der Maßgabe, daß die Summe o+p+q > 0 ist,
A ein Rest der Formel

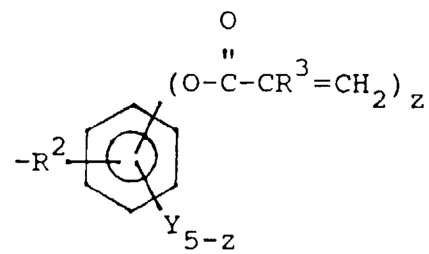

ist, wobei z 1, 2, 3, 4 oder 5,
$R^2$ einen linearen oder verzweigten Alkylenrest mit 1 bis 8 Kohlenstoffatom(en) je Rest, der gegebenenfalls Ether-, Amin-, Sulfid-, Ester-, Amid-, Harnstoff- und Urethangruppen enthalten kann,
$R^3$ ein Wasserstoffatom oder einen Methylrest und
Y gleich oder verschieden ist, ein Wasserstoffatom oder einen linearen oder verzweigten Alkylrest mit 1 bis 6 Kohlenstoffatom(en) je Rest,

$$-X,\ -CN,\ -NR^4_2,\ -SR^4,\ -O-\overset{\overset{O}{\|}}{C}-R^4,\ -\overset{\overset{O}{\|}}{C}-OR^4,\ -NR^4-\overset{\overset{O}{\|}}{C}-R^4,\ -\overset{\overset{O}{\|}}{C}-NR^4_2$$

oder $-NO_2$ bedeutet, wobei X die oben dafür angegebene Bedeutung hat und $R^4$ die Bedeutung von R hat, mit der Maßgabe, daß mindestens ein Rest A je Molekül enthalten ist, und g 0, 1 oder 2, n 0 oder eine ganze Zahl von 1 bis 1500 und m 0 oder eine ganze Zahl von 1 bis 200 ist.

**3.** (Meth)acryloxygruppen aufweisende Organosiliciumverbindungen nach Anspruch 1 oder 2, dadurch gekennzeichnet, daß A ein Rest der Formel

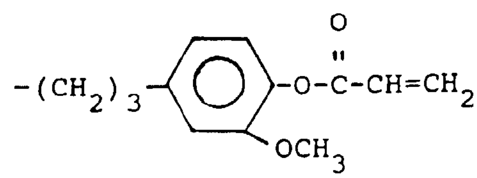

ist.

4. Verfahren zur Herstellung von (Meth)acryloxygruppen aufweisenden Organosiliciumverbindungen nach Anspruch 1, 2 oder 3, dadurch gekennzeichnet, daß Organosiliciumverbindungen (1) mit Einheiten der Formel

$$B_aR_bSiX_cO_{\frac{4-(a+b+c)}{2}} \qquad (II),$$

wobei R gleich oder verschieden ist, einen einwertigen, gegebenenfalls halogenierten Kohlenwasserstoffrest mit 1 bis 18 Kohlenstoffatom(en) je Rest oder einen Rest der Formel

$$-R'-[OCH_2CH_2]_o-[OCH(CH_3)CH_2]_p-[O(CH_2)_4]_q-OR''$$

bedeutet, wobei

R' ein linearer oder verzweigter Alkylenrest mit 1 bis 8 Kohlenstoffatom(en) je Rest,
R'' ein Wasserstoffatom, ein Alkylrest mit 1 bis 8 Kohlenstoffatom(en) je Rest oder ein Rest der Formel -CO-R''' ist, wobei R''' ein Alkylrest mit 1 bis 8 Kohlenstoffatom(en) je Rest ist,
o 0 oder eine ganze Zahl von 1 bis 100,
p 0 oder eine ganze Zahl von 1 bis 100 und
q 0 oder eine ganze Zahl von 1 bis 100 ist,
mit der Maßgabe, daß die Summe $o+p+q > 0$ ist,
X gleich oder verschieden ist, ein Chloratom oder ein Rest der Formel $-OR^1$ ist,
wobei $R^1$ einen Alkylrest mit 1 bis 8 Kohlenstoffatom(en) je Rest, der durch ein Ethersauerstoffatom substituiert sein kann, bedeutet,
a 0 oder 1,
b 0, 1, 2 oder 3,
c 0, 1, 2 oder 3
und die Summe $a+b+c \leq 4$ ist und
B ein Rest der Formel

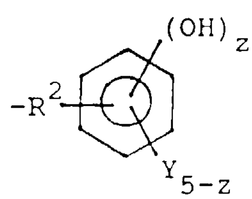

ist, wobei z 1, 2, 3, 4 oder 5,
$R^2$ einen linearen oder verzweigten Alkylenrest mit 1 bis 8 Kohlenstoffatom(en) je Rest, der gegebenenfalls Ether-, Amin-, Sulfid-, Ester-, Amid-, Harnstoff- und Urethangruppen enthalten kann,
Y gleich oder verschieden ist, ein Wasserstoffatom oder einen linearen oder verzweigten Alkylrest mit 1 bis 6 Kohlenstoffatom(en) je Rest,

$$-X,\ -CN,\ -NR^4_2,\ -SR^4,\ -O-\overset{O}{\overset{\|}{C}}-R^4,\ -\overset{O}{\overset{\|}{C}}-OR^4,\ -NR^4-\overset{O}{\overset{\|}{C}}-R^4,\ -\overset{O}{\overset{\|}{C}}-NR^4_2$$

oder $-NO_2$ bedeutet, wobei X die oben dafür angegebene Bedeutung hat und $R^4$ die Bedeutung von R hat, mit der Maßgabe, daß mindestens ein Rest B je Molekül enthalten ist,
mit (Meth)acrylsäurechlorid (2) der Formel

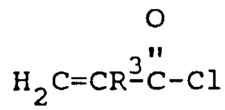

wobei $R^3$ ein Wasserstoffatom oder einen Methylrest ist, in Gegenwart von Basen (3) umgesetzt werden.

**5.** Verfahren zur Herstellung von (Meth)acryloxygruppen aufweisenden Organosiliciumverbindungen nach Anspruch 1, 2 oder 3, dadurch gekennzeichnet, daß Organosiliciumverbindungen (1) mit Einheiten der Formel

$$B_aR_bSiX_cO_{\frac{4-(a+b+c)}{2}} \quad \text{(II)},$$

wobei R gleich oder verschieden ist, einen einwertigen, gegebenenfalls halogenierten Kohlenwasserstoffrest mit 1 bis 18 Kohlenstoffatom(en) je Rest oder einen Rest der Formel

$$-R'-[OCH_2CH_2]_o-[OCH(CH_3)CH_2]_p-[O(CH_2)_4]_q-OR''$$

bedeutet, wobei

R' ein linearer oder verzweigter Alkylenrest mit 1 bis 8 Kohlenstoffatom(en) je Rest,
R" ein Wasserstoffatom, ein Alkylrest mit 1 bis 8 Kohlenstoffatom(en) je Rest oder ein Rest der Formel -CO-R"' ist, wobei R"' ein Alkylrest mit 1 bis 8 Kohlenstoffatom(en) je Rest ist,
o 0 oder eine ganze Zahl von 1 bis 100,
p 0 oder eine ganze Zahl von 1 bis 100 und
q 0 oder eine ganze Zahl von 1 bis 100 ist,
mit der Maßgabe, daß die Summe $o+p+q > 0$ ist,
X gleich oder verschieden ist, ein Chloratom oder ein Rest der Formel $-OR^1$ ist,
wobei $R^1$ einen Alkylrest mit 1 bis 8 Kohlenstoffatom(en) je Rest, der durch ein Ethersauerstoffatom substituiert sein kann, bedeutet,
a 0 oder 1,
b 0, 1, 2 oder 3,
c 0, 1, 2 oder 3
und die Summe $a+b+c \leq 4$ ist und
B ein Rest der Formel

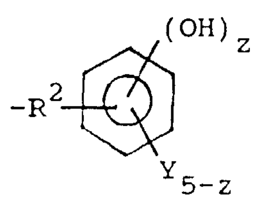

ist, wobei z 1, 2, 3, 4 oder 5,
$R^2$ einen linearen oder verzweigten Alkylenrest mit 1 bis 8 Kohlenstoffatom(en) je Rest, der gegebenenfalls Ether-, Amin-, Sulfid-, Ester-, Amid-, Harnstoff- und Urethangruppen enthalten kann,
Y gleich oder verschieden ist, ein Wasserstoffatom oder einen linearen oder verzweigten Alkylrest mit 1 bis 6 Kohlenstoffatom(en) je Rest,

$$-X,\ -CN,\ -NR^4_2,\ -SR^4,\ -O-\overset{O}{\overset{\|}{C}}-R^4,\ -\overset{O}{\overset{\|}{C}}-OR^4,\ -NR^4-\overset{O}{\overset{\|}{C}}-R^4,\ -\overset{O}{\overset{\|}{C}}-NR^4_2$$

oder $-NO_2$ bedeutet, wobei X die oben dafür angegebene Bedeutung hat und $R^4$ die Bedeutung von R hat, mit der Maßgabe, daß mindestens ein Rest B je Molekül enthalten ist,
mit (Meth)acrylsäure in Gegenwart von sauren Katalysatoren (4) verestert werden.

**6.** Verfahren nach Anspruch 4 oder 5, dadurch gekennzeichnet, daß die so erhaltenen (Meth)acryloxygruppen aufweisenden Organopolysiloxane mit Vinylethern unter Säurekatalyse oder mit Carboxylierungsmittel umgesetzt werden.

**7.** Durch Bestrahlung mit Licht vernetzbare Zusammensetzungen enthaltend

(A) (Meth)acryloxygruppen aufweisende Organopolysiloxane gemäß Anspruch 1, 2 oder 3 und
(B) Photoinitiatoren und/oder Photosensibilisatoren.

**8.** Verwendung der Zusammensetzungen nach Anspruch 7 zur Herstellung von Überzügen.

**Claims**

**1.** (Meth)acryloxy-containing organosilicon compound having units of the formula

$$A_aR_bSiX_cO_{\frac{4-(a+b+c)}{2}} \qquad (I),$$

in which R is identical or different and is a monovalent, unsubstituted or halogenated hydrocarbon radical having 1 to 18 carbon atoms per radical, or is a radical of the formula

$$-R'-[OCH_2CH_2]_o-[OCH(CH_3)CH_2]_p-[O(CH_2)_4]_q-OR''$$

where

R' is a linear or branched alkylene radical having 1 to 8 carbon atoms per radical,
R" is a hydrogen atom, an alkyl radical having 1 to 8 carbon atoms per radical or a radical of the formula -CoR"', where R"' is an alkyl radical having 1 to 8 carbon atoms per radical,
o is 0 or an integer from 1 to 100,
p is 0 or an integer from 1 to 100 and
q is 0 or an integer from 1 to 100,
with the proviso that the sum o+p+q > 0,
X is identical or different and is a chlorine atom or a radical of the formula $-OR^1$
where $R^1$ is an alkyl radical having 1 to 8 carbon atoms per radical which can be substituted by an ether oxygen atom,
a is 0 or 1,
b is 0, 1, 2 or 3,
c is 0, 1, 2 or 3
and the sum $a+b+c \leq 4$, and
A is a radical of the formula

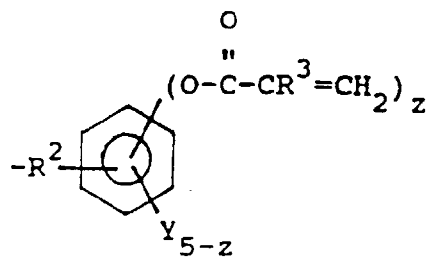

where z is 1, 2, 3, 4 or 5,
$R^2$ is a linear or branched alkylene radical having 1 to 8 carbon atoms per radical, which may if desired contain ether, amine, sulphide, ester, amide, urea and urethane groups,
$R^3$ is a hydrogen atom or a methyl radical, and
Y is identical or different and is a hydrogen atom or a linear or branched alkyl radical having 1 to 6 carbon atoms per radical,

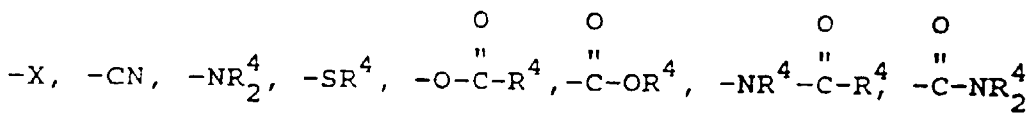

or $-NO_2$, where X is as defined above and $R^4$ is as defined for R,
with the proviso that there is at least one radical A per molecule.

**2.** (Meth)acryloxy-containing organosilicon compound according to Claim 1, characterized in that it is an organopolysiloxane of the formula

$$A_gR_{3-g}SiO(SiR_2O)_n(SiRAO)_mSiR_{3-g}A_g \qquad (III)$$

in which R is identical or different and is a monovalent, unsubstituted or halogenated hydrocarbon radical having 1 to 18 carbon atoms per radical, or is a radical of the formula

$$-R'-[OCH_2CH_2]_o-[OCH(CH_3)CH_2]_p-[O(CH_2)_4]_q-OR''$$

where

R' is a linear or branched alkylene radical having 1 to 8 carbon atoms per radical,
R" is a hydrogen atom, an alkyl radical having 1 to 8 carbon atoms per radical or a radical of the formula -CO-R"', where R"' is an alkyl radical having 1 to 8 carbon atoms per radical,
o is 0 or an integer from 1 to 100,
p is 0 or an integer from 1 to 100 and
q is 0 or an integer from 1 to 100,
with the proviso that the sum o+p+q > 0,
A is a radical of the formula

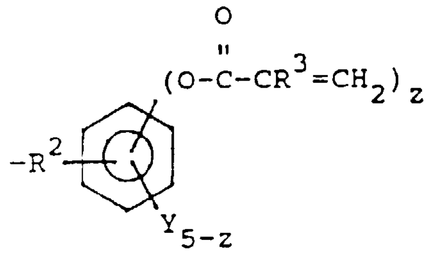

where z is 1, 2, 3, 4 or 5,
$R^2$ is a linear or branched alkylene radical having 1 to 8 carbon atoms per radical, which may if desired contain ether, amine, sulphide, ester, amide, urea and urethane groups,
$R^3$ is a hydrogen atom or a methyl radical, and
Y is identical or different and is a hydrogen atom or a linear or branched alkyl radical having 1 to 6 carbon atoms per radical,

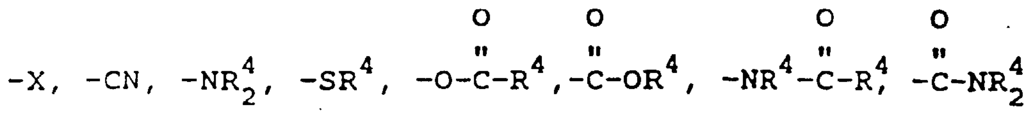

or $-NO_2$, where X is as defined above and $R^4$ is as defined for R,

with the proviso that there is at least one radical A per molecule, and g is 0, 1 or 2, n is 0 or an integer from 1 to 1500 and m is 0 or an integer from 1 to 200.

**3.** (Meth)acryloxy-containing organosilicon compound according to Claim 1 or 2, characterized in that A is a radical of the formula

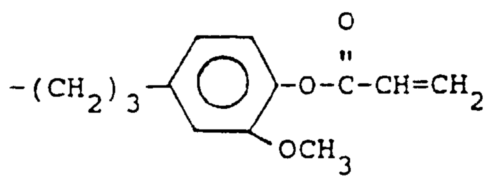

**4.** Process for preparing a (meth)acryloxy-containing organosilicon compound according to Claim 1, 2 or 3, characterized in that organosilicon compounds (1) having units of the formula

$$B_aR_bSiX_cO_{\frac{4-(a+b+c)}{2}} \qquad (II),$$

in which R is identical or different and is a monovalent, unsubstituted or halogenated hydrocarbon radical having 1 to 18 carbon atoms per radical, or is a radical of the formula

$$-R'-[OCH_2CH_2]_o-[OCH(CH_3)CH_2]_p-[O(CH_2)_4]_q-OR''$$

where

R' is a linear or branched alkylene radical having 1 to 8 carbon atoms per radical,
R" is a hydrogen atom, an alkyl radical having 1 to 8 carbon atoms per radical or a radical of the formula -CO-R"', where R"' is an alkyl radical having 1 to 8 carbon atoms per radical,
o is 0 or an integer from 1 to 100,

p is 0 or an integer from 1 to 100 and
q is 0 or an integer from 1 to 100,
with the proviso that the sum $o+p+q > 0$,
X is identical or different and is a chlorine atom or a radical of the formula $-OR^1$
where $R^1$ is an alkyl radical having 1 to 8 carbon atoms per radical which can be substituted by an ether oxygen atom,
a is 0 or 1,
b is 0, 1, 2 or 3,
c is 0, 1, 2 or 3
and the sum $a+b+c \leq 4$, and
B is a radical of the formula

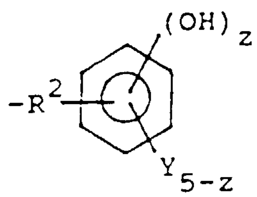

where z is 1, 2, 3, 4 or 5,
$R^2$ is a linear or branched alkylene radical having 1 to 8 carbon atoms per radical, which may if desired contain ether, amine, sulphide, ester, amide, urea and urethane groups,
Y is identical or different and is a hydrogen atom or a linear or branched alkyl radical having 1 to 6 carbon atoms per radical,

$$-X,\ -CN,\ -NR^4_2,\ -SR^4,\ -O-\overset{O}{\overset{\|}{C}}-R^4,\ -\overset{O}{\overset{\|}{C}}-OR^4,\ -NR^4-\overset{O}{\overset{\|}{C}}-R^4,\ -\overset{O}{\overset{\|}{C}}-NR^4_2$$

or $-NO_2$, where X is as defined above and $R^4$ is as defined for R,
with the proviso that there is at least one radical B per molecule,
are reacted with (meth)acryloyl chloride (2) of the formula

$$H_2C=CR^3-\overset{O}{\overset{\|}{C}}-Cl$$

where $R^3$ is a hydrogen atom or a methyl radical, in the presence of bases (3).

**5.** Process for preparing a (meth)acryloxy-containing organosilicon compound according to Claim 1, 2 or 3, characterized in that organosilicon compounds (1) having units of the formula

$$B_aR_bSiX_cO_{\frac{4-(a+b+c)}{2}} \qquad (II),$$

in which R is identical or different and is a monovalent, unsubstituted or halogenated hydrocarbon radical having 1 to 18 carbon atoms per radical, or is a radical of the formula

$$-R'-[OCH_2CH_2]_o-[OCH(CH_3)CH_2]_p-[O(CH_2)_4]_q-OR''$$

where

R' is a linear or branched alkylene radical having 1 to 8 carbon atoms per radical,
R" is a hydrogen atom, an alkyl radical having 1 to 8 carbon atoms per radical or a radical of the formula -CO-R"', where R"' is an alkyl radical having 1 to 8 carbon atoms per radical,
o is 0 or an integer from 1 to 100,
p is 0 or an integer from 1 to 100 and
q is 0 or an integer from 1 to 100,
with the proviso that the sum o+p+q > 0,
X is identical or different and is a chlorine atom or a radical of the formula $-OR^1$
where $R^1$ is an alkyl radical having 1 to 8 carbon atoms per radical which can be substituted by an ether oxygen atom,
a is 0 or 1,
b is 0, 1, 2 or 3,
c is 0, 1, 2 or 3
and the sum a+b+c ≤ 4, and
B is a radical of the formula

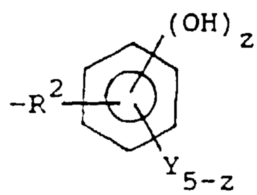

where z is 1, 2, 3, 4 or 5,
$R^2$ is a linear or branched alkylene radical having 1 to 8 carbon atoms per radical, which may if desired contain ether, amine, sulphide, ester, amide, urea and urethane groups,
Y is identical or different and is a hydrogen atom or a linear or branched alkyl radical having 1 to 6 carbon atoms per radical,

$$-X,\ -CN,\ -NR^4_2,\ -SR^4,\ -O-\overset{O}{\overset{\|}{C}}-R^4,\ -\overset{O}{\overset{\|}{C}}-OR^4,\ -NR^4-\overset{O}{\overset{\|}{C}}-R^4,\ -\overset{O}{\overset{\|}{C}}-NR^4_2$$

or $-NO_2$, where X is as defined above and $R^4$ is as defined for R,
with the proviso that there is at least one radical B per molecule,
are esterified with (meth)acrylic acid in the presence of acidic catalysts (4).

**6.** Process according to Claim 4 or 5, characterized in that the (meth)acryloxy-containing organopolysiloxanes thus obtained are reacted with vinyl ethers, with acid catalysis, or with carboxylating agent.

**7.** Composition crosslinkable by irradiation with light, comprising

(A) a (meth)acryloxy-containing organopolysiloxane according to Claim 1, 2 or 3 and
(B) photoinitiators and/or photosensitizers.

**8.** Use of the composition according to Claim 7 for producing coatings.

**Revendications**

**1.** Composés organosiliciés renfermant des groupes (méth)acryloxy, ayant des motifs de formule

$$A_aR_bSiX_cO_{\frac{4-(a+b+c)}{2}} \qquad (I),$$

dans laquelle R est identique ou différent, et représente un radical hydrocarboné monovalent, éventuellement halogéné, ayant de 1 à 18 atome(s) de carbone par radical, ou un radical de formule

$$-R'-[OCH_2CH_2]_o-[OCH(CH_3)CH_2]_p-[O(CH_2)_4]_q-OR''$$

dans laquelle

R' est un radical alkylène linéaire ou ramifié ayant de 1 à 18 atome(s) de carbone par radical,
R" est un atome d'hydrogène, un radical alkyle ayant de 1 à 8 atome(s) de carbone par radical ou un radical de formule -CO-R"', où R"' est un radical alkyle ayant de 1 à 8 atome(s) de carbone par radical,
o vaut 0 ou est un entier de 1 à 100,
p vaut 0 ou est un entier de 1 à 100 et
q vaut 0 ou est un entier de 1 à 100,
à condition que la somme o + p + q > 0
X est identique ou différent, et est un atome de chlore ou un radical de formule $-OR^1$,
où $R^1$ représente un radical alkyle ayant de 1 à 8 atome(s) de carbone par radical, qui peut être substitué par un atome d'oxygène d'éther,
a vaut 0 ou 1,
b vaut 0, 1, 2 ou 3,
c vaut 0, 1, 2 ou 3
et la somme a + b + c ≤ 4 et
A est un radical de formule

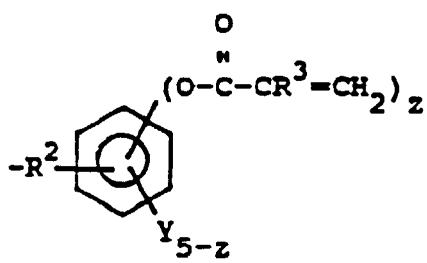

dans laquelle z vaut 1, 2, 3, 4 ou 5,
$R^2$ est un radical alkylène linéaire ou ramifié ayant de 1 à 8 atome(s) de carbone par radical, qui peut éventuellement renfermer des groupes éther, amine, sulfure, ester, amide, urée et uréthanne,
$R^3$ est un atome d'hydrogène ou un radical méthyle et
Y est identique ou différent et représente un atome d'hydrogène ou un radical alkyle linéaire ou ramifié ayant de 1 à 6 atome(s) de carbone par radical,

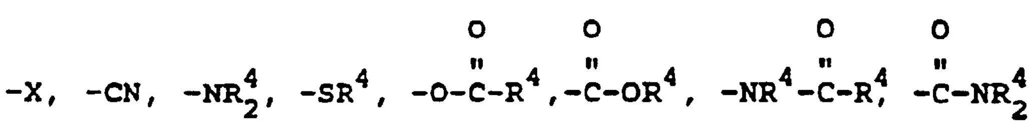

ou $-NO_2$, où X a la signification donnée ci-dessus à cet effet et $R^4$ a la signification de R,
à condition qu'au moins un radical A soit présent par molécule.

**2.** Composés organosiliciés renfermant des groupes (méth)acryloxy selon la revendication 1, caractérisés en ce que

ce sont des organopolysiloxanes de formule

$$A_gR_{3-g}SiO(SiR_2O)_n(SiRAO)_mSiR_{3-g}A_g \quad \text{(III)}$$

dans laquelle R est identique ou différent et représente un radical hydrocarboné monovalent, et éventuellement halogéné, ayant de 1 à 18 atome(s) de carbone par radical, ou un radical de formule

$$-R'-[OCH_2CH_2]_o-[OCH(CH_3)CH_2]_p-[O(CH_2)_4]_q-OR''$$

dans laquelle

R' est un radical alkylène linéaire ou ramifié ayant de 1 à 18 atome(s) de carbone par radical,
R" est un atome d'hydrogène, un radical alkyle ayant de 1 à 8 atome(s) de carbone par radical ou un radical de formule -CO-R"', où R"' est un radical alkyle ayant de 1 à 8 atome(s) de carbone par radical,
o vaut 0 ou est un entier de 1 à 100,
p vaut 0 ou est un entier de 1 à 100 et
q vaut 0 ou est un entier de 1 à 100,
à condition que la somme $o + p + q > 0$
A est un radical de formule

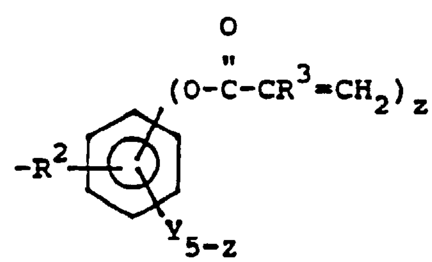

dans laquelle z vaut 1, 2, 3, 4 ou 5,
$R^2$ est un radical alkylène linéaire ou ramifié ayant de 1 à 8 atome(s) de carbone par radical, qui peut éventuellement renfermer des groupes éther, amine, sulfure, ester, amide, urée et uréthanne,
$R^3$ est un atome d'hydrogène ou un radical méthyle et
Y est identique ou différent et représente un atome d'hydrogène ou un radical alkyle linéaire ou ramifié ayant de 1 à 6 atome(s) de carbone par radical,

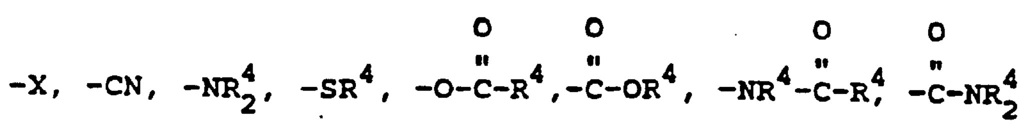

ou $-NO_2$, où X a la signification donnée ci-dessus a cet effet et $R^4$ a la signification de R,
à condition qu'au moins un radical A soit présent par molécule, et g vaut 0, 1 ou 2, n vaut 0 ou est un entier de 1 à 1 500 et m vaut 0 ou est un entier de 1 à 200.

3. Composés organosiliciés (méth)acryloxy selon la revendication 1 ou 2, caractérisés en ce que A est un radical de formule

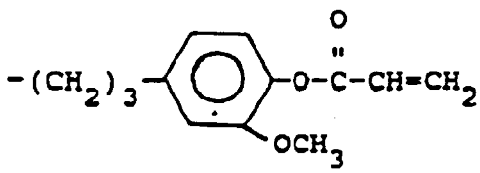

4. Procédé de préparation de composés organosiliciés renfermant des groupes (méth)acryloxy selon la revendication 1, 2 ou 3, caractérisé en ce que l'on fait réagir, en présence de bases (3), des composés organosiliciés (1) ayant des motifs de formule

$$B_aR_bSiX_cO_{\frac{4-(a+b+c)}{2}} \quad (II),$$

dans laquelle R est identique ou différent, et représente un radical hydrocarboné monovalent, éventuellement halogéné, ayant de 1 à 18 atome(s) de carbone par radical, ou
un radical de formule

$$-R'-[OCH_2CH_2]_o-[OCH(CH_3)CH_2]_p-[O(CH_2)_4]_q-OR''$$

dans laquelle

R' est un radical alkylène linéaire ou ramifié ayant de 1 à 18 atome(s) de carbone par radical,
R" est un atome d'hydrogène, un radical alkyle ayant de 1 à 8 atome(s) de carbone par radical ou un radical de formule -CO-R"', où R"' est un radical alkyle ayant de 1 à 8 atome(s) de carbone par radical,
o vaut 0 ou est un entier de 1 à 100,
p vaut 0 ou est un entier de 1 à 100 et
q vaut 0 ou est un entier de 1 à 100,
à condition que la somme $o + p + q > 0$
X est identique ou différent, et est un atome de chlore ou un radical de formule $-OR^1$,
où $R^1$ représente un radical alkyle ayant de 1 à 8 atome(s) de carbone par radical, qui peut être substitué par un atome d'oxygène d'éther,
a vaut 0 ou 1,
b vaut 0, 1, 2 ou 3,
c vaut 0, 1, 2 ou 3
et la somme $a + b + c \leq 4$ et
B est un radical de formule

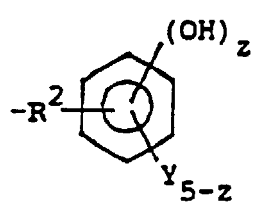

dans laquelle z vaut 1, 2, 3, 4 ou 5,
$R^2$ est un radical alkylène linéaire ou ramifié ayant de 1 à 8 atome(s) de carbone par radical, qui peut éventuellement renfermer des groupes éther, amine, sulfure, ester, amide, urée et uréthanne,
Y est identique ou différent et représente un atome d'hydrogène ou un radical alkyle linéaire ou ramifié ayant de 1 à 6 atome(s) de carbone par radical,

$$-X,\ -CN,\ -NR^4_2,\ -SR^4,\ -O-\overset{O}{\overset{\|}{C}}-R^4,\ -\overset{O}{\overset{\|}{C}}-OR^4,\ -NR^4-\overset{O}{\overset{\|}{C}}-R^4,\ -\overset{O}{\overset{\|}{C}}-NR^4_2$$

ou $-NO_2$, où X a la signification donnée ci-dessus à cet effet et $R^4$ a la signification de R, à condition qu'au moins un radical B soit présent par molécule, avec du chlorure de (méth)acryloyle (2) de formule

$$H_2C{=}CR^3-\overset{O}{\overset{\|}{C}}-Cl$$

dans laquelle $R^3$ est un atome d'hydrogène ou un radical méthyle.

**5.** Procédé de préparation de composés organosiliciés renfermant des groupes (méth)acryloxy selon la revendication 1, 2 ou 3, caractérisé en ce que l'on estérifie, en présence de catalyseurs acides (4), des composés organosiliciés (1) ayant des motifs de formule

$$B_aR_bSiX_cO_{\frac{4-(a+b+c)}{2}} \qquad (II),$$

dans laquelle R est identique ou différent, et représente un radical hydrocarboné monovalent, éventuellement halogéné, ayant de 1 à 18 atome(s) de carbone par radical, ou un radical de formule

$$-R'-[OCH_2CH_2]_o-[OCH(CH_3)CH_2]_p-[O(CH_2)_4]_q-OR''$$

dans laquelle

R' est un radical alkylène linéaire ou ramifié ayant de 1 à 18 atome(s) de carbone par radical,
R" est un atome d'hydrogène, un radical alkyle ayant de 1 à 8 atome(s) de carbone par radical ou un radical de formule -CO-R"', où R"' est un radical alkyle ayant de 1 à 8 atome(s) de carbone par radical,
o vaut 0 ou est un entier de 1 à 100,
p vaut 0 ou est un entier de 1 à 100 et
q vaut 0 ou est un entier de 1 à 100,
à condition que la somme $o + p + q > 0$
X est identique ou différent, et est un atome de cnlore ou un radical de formule $-OR^1$,
où $R^1$ représente un radical alkyle ayant de 1 à 8 atome(s) de carbone par radical, qui peut être substitué par un atome d'oxygène d'éther,
a vaut 0 ou 1,
b vaut 0, 1, 2 ou 3,
c vaut 0, 1, 2 ou 3
et la somme $a + b + c \leq 4$ et
B est un radical de formule

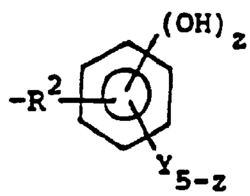

dans laquelle z vaut 1, 2, 3, 4 ou 5,
$R^2$ est un radical alkylène linéaire ou ramifié ayant de 1 à 8 atome(s) de carbone par radical, qui peut éventuellement renfermer des groupes éther, amine, sulfure, ester, amide, urée et uréthanne,
Y est identique ou différent et représente un atome d'hydrogène ou un radical alkyle linéaire ou ramifié ayant de 1 à 6 atome(s) de carbone par radical,

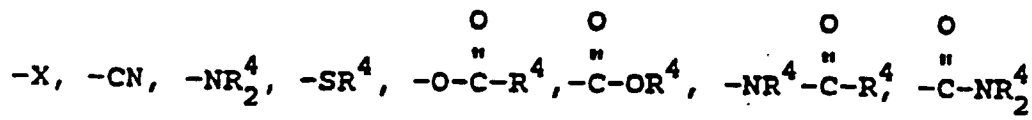

ou $-NO_2$, où X a la signification donnée ci-dessus à cet effet et $R^4$ a la signification de R,
à condition qu'au moins un radical B soit présent par molécule,
avec de l'acide (méth)acrylique.

**6.** Procédé selon la revendication 4 ou 5, caractérisé en ce que les organopolysiloxanes renfermant des groupes (méth)acryloxy, ainsi obtenus, sont mis à réagir avec des éthers vinyliques, avec catalyse acide ou avec un agent de carboxylation.

**7.** Compositions réticulables par irradiation à la lumière, comprenant

(A) des organopolysiloxanes renfermant des groupes (méth)acryloxy selon la revendication 1, 2 ou 3 et
(B) des photoamorceurs et/ou des photo-sensibilisateurs.

**8.** Utilisation des compositions selon la revendication 7, pour la production de revêtements.